(19) **Europäisches Patentamt / European Patent Office / Office européen des brevets**

(11) **EP 3 391 070 B1**

(12) **EUROPÄISCHE PATENTSCHRIFT**

(45) Veröffentlichungstag und Bekanntmachung des Hinweises auf die Patenterteilung:
**29.12.2021  Patentblatt 2021/52**

(21) Anmeldenummer: **16787480.9**

(22) Anmeldetag: **27.10.2016**

(51) Int Cl.:
*G01S 1/02* *(2010.01)*        *G01S 1/20* *(2006.01)*
*G01S 5/02* *(2010.01)*        *G01S 5/10* *(2006.01)*

(86) Internationale Anmeldenummer:
**PCT/EP2016/075969**

(87) Internationale Veröffentlichungsnummer:
**WO 2017/102159 (22.06.2017 Gazette 2017/25)**

(54) **SYSTEM UND VERFAHREN MIT ZUMINDEST DREI SIGNALE EMPFANGENDEN STATIONEN**

SYSTEM AND METHOD WITH STATIONS RECEIVING AT LEAST THREE SIGNALS

SYSTÈME ET PROCÉDÉ COMPRENANT AU MOINS TROIS STATIONS RECEVANT DES SIGNAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2015  DE 102015121724**

(43) Veröffentlichungstag der Anmeldung:
**24.10.2018  Patentblatt 2018/43**

(60) Teilanmeldung:
**21189562.8 / 3 923 015**

(73) Patentinhaber: **Symeo GmbH**
**85579 Neubiberg (DE)**

(72) Erfinder:
 • **VOSSIEK, Martin**
  **90766 Fürth (DE)**
 • **GULDEN, Peter**
  **85435 Erding (DE)**
 • **KIRSCH, Fabian**
  **27619 Schiffdorf-Sellstedt (DE)**

(74) Vertreter: **Pfrang, Tilman**
**Meissner Bolte Patentanwälte**
**Rechtsanwälte Partnerschaft mbB**
**Widenmayerstraße 47**
**80538 München (DE)**

(56) Entgegenhaltungen:
**EP-A1- 2 653 886        DE-T2- 69 723 587**
**US-A1- 2012 252 503**

 • **ROEHR SVEN ET AL: "Wireless local positioning - existing solutions and novel system concepts", 2015 IEEE MTT-S INTERNATIONAL CONFERENCE ON MICROWAVES FOR INTELLIGENT MOBILITY (ICMIM), IEEE, 27. April 2015 (2015-04-27), Seiten 1-4, XP032783381, DOI: 10.1109/ICMIM.2015.7117941 [gefunden am 2015-06-03]**
 • **SVEN ROEHR ET AL: "Method for High Precision Radar Distance Measurement and Synchronization of Wireless Units", MICROWAVE SYMPOSIUM, 2007. IEEE/MTT-S INTERNATIONAL, IEEE, PI, 1. Juni 2007 (2007-06-01), Seiten 1315-1318, XP031112177, ISBN: 978-1-4244-0687-6**

EP 3 391 070 B1

**Beschreibung**

Die Erfindung bezieht sich auf ein System und ein Verfahren mit zumindest drei Signale empfangenden Stationen. Die Erfindung betrifft insbesondere eine Anordnung und ein Verfahren zur Berechnung von Uhrzeitoffsets in Funksystemen bzw. zur Berechnung von Positionen.

EP 2 653 886 A1 offenbart ein Referenz-Signal-Übertragungs-Verfahren und ein System für eine Lokalisierungsmessung, ein Lokalisierungsmessungsverfahren sowie eine entsprechende Vorrichtung. DE 697 235 87 T2 offenbart ein Verfahren zur Bestimmung von Zeitsteuerungsdifferenzen zwischen einer Vielzahl von Funksendern, ein Funknetzwerk mit einer Vielzahl von Funksendern und einer Messeinrichtung sowie ein entsprechendes Mobilsystem. Funkortungssysteme können auf unterschiedliche Messgrößen abheben. Für sich bekannte Messgrößen sind z.B. Winkelmessung, Laufzeitmessung oder Feldstärkemessungen. Dabei sind die Laufzeitmessungen (TOA - time of arrival) im Bereich hochgenauer Systeme stark vertreten. Allerdings ist aufgrund der sehr großen Geschwindigkeit des Lichtes eine äußerst genaue Synchronisation beteiligter Stationen erforderlich. Ansonsten führen schon geringe Zeitfehler zu großen Messfehlern in der Entfernung bei Systemen, welche Positionen bestimmen. Dadurch ist eine Synchronisation der Stationen eine wichtige Problemstellung, die eng mit Funkortung verknüpft ist. Das Problem wurde in der Vergangenheit zum Teil dadurch entschärft, dass nur Laufzeitunterschiede ausgewertet werden (TDOA - time difference of arrival). Damit wird zwar eine Ortungsgenauigkeit je nach Situation reduziert, aber eine genaue Synchronisation zwischen einer mobilen Station und ortsfesten Stationen ist nicht mehr erforderlich.

Das verbleibende Problem, die ortsfesten Stationen untereinander zu synchronisieren, wurde in der Vergangenheit auf verschiedene Weisen gelöst:

- Ein Verfahren besteht darin, dass ein Glasfasernetzwerk eine Zeitreferenz systemweit verfügbar macht.
- Ein anderes Verfahren besteht darin, dass ein zusätzlicher "mobiler" Knoten an einem bekannten Ort fixiert wird. Aus der Messung der Laufzeiten zu diesem Knoten und den bekannten Abständen werden die Uhrenabweichungen bestimmt.
- Noch ein anderes Verfahren besteht darin, dass in jedem Messzyklus eine der ortsfesten Stationen ein Synchronisationssignal aussendet. Die übrigen ortsfesten Stationen synchronisieren sich darauf.

Die erste Lösung ist sehr aufwändig in der Installation und teuer bei der Anfangsinvestition in das Glasfasernetz. Die anderen beiden Lösungen beruhen auf Grundannahmen, die die mögliche Genauigkeit beschränken:

- Zur Synchronisation verwendete Funkkanäle müssen eine freie Sichtverbindung haben.
- Zusätzlich auftretende Mehrwege müssen einen ausreichenden Pfadlängen-Unterschied haben, um mit der verfügbaren Bandbreite von der Sichtverbindung trennbar zu sein.
- Eine Länge der Sichtverbindung muss bekannt sein.
- Uhren der ortsfesten Stationen werden in einer Zeit zwischen Synchronisation und Messung als absolut gangtreu angenommen.
- Eine Übertragung eines Systemtaktes auf eine Signalerzeugung innerhalb einer Station wird als ideal und fehlerfrei angenommen.

Jede Abweichung von diesen idealisierten Annahmen hat einen Synchronisationsfehler und daraus folgend eine verfälschte Messung zur Folge. Eine systematische Abweichung von diesen Annahmen kann zu einem systematischen Messfehler führen, der auch durch nachfolgende statistische Ausgleichverfahren nicht behoben werden kann.

Ferner ist die durch bisherige Verfahren erreichte Genauigkeit nicht ausreichend, um Phasen-kohärente Messungen zu unternehmen.

Allgemein bekannt ist eine Vorsynchronisierung mit einer Genauigkeit, die es ermöglicht, verschiedene Sender im iFDMA zu trennen nach S. Roehr, M. Vossiek, P. Gulden, "Method for High Precision Radar Distance Measurement and Synchronization of Wireless Units," 2007 IEEE MTT-S International Microwave Symposium, Honolulu, USA, June 2007, pp. 1315-1318.

Die Aufgabe der Erfindung besteht darin, ein System und ein Verfahren mit zumindest drei Signale austauschenden Stationen weiter zu entwickeln. Insbesondere soll eine Mess-Genauigkeit, insbesondere eine zeitliche Genauigkeit der Messung von Signallaufzeiten im Funkkanal, verbessert werden.

Diese Aufgabe wird durch das Verfahren mit den Merkmalen des Patentanspruchs 1 bzw. das System mit den Merkmalen des Patentanspruchs 12 sowie entsprechende Stationen gelöst. Vorteilhafte Ausgestaltungen sind Gegenstand von abhängigen Ansprüchen.

Demgemäß bevorzugt wird ein wellenbasiertes Verfahren, bei dem zumindest zwei Referenz-Stationen Signale aussenden, wobei die Signale nahezu zeitgleich ausgesandt werden, im selben Frequenzbereich ausgesandt werden, durch ein Multiplexverfahren trennbar sind, wobei mindestens eine der Referenz-Stationen neben der Aussendung des eigenen Signals auch mindestens ein von einer anderen Referenz-Station zeitgleich gesendetes Signal empfängt und einen zeitlichen Versatz und/oder eine Phasenlage zwischen der eigenen Aussendung und dem Empfang hochgenau bestimmt und wobei zumindest eine und zumindest empfangende Station die Signale von mindestens zwei der Referenz-Stationen empfängt.

Das wellenbasierte Verfahren ist insbesondere ein Verfahren zur Bestimmung einer Position der zumindest einen und zumindest empfangenden Station bzw. umfasst einen Verfahrensschritt der Bestimmung der Position der zumindest einen und zumindest empfangenden Station. Dieselbe Aussendung eines Signals kann sowohl zur Ortung als auch zur Synchronisation (durch Empfang und Weiterverarbeitung mindestens einer der Referenz-Stationen) verwendet (herangezogen) werden. Mindestens eine der Referenz-Stationen kann ein Signal zur Ortung an die zumindest eine und zumindest empfangende Station senden (wobei dieses Signal dort entsprechend weiterverarbeitet werden kann) und ggf. zusätzlich einen zeitlichen Versatz und/oder eine Phasenlage zwischen dieser (eigenen) Aussendung und dem Empfang einer weiteren Referenz-Station bestimmen. Es soll also beispielsweise nicht (auch wenn dies optional zusätzlich vorgesehen sein kann) ein Zeitversatz (Zeitdifferenz) in diesem Schritt bestimmt werden zwischen dem Empfang von zwei Signalen von zwei unterschiedlichen Referenz-Stationen bei der zumindest einen und zumindest empfangenden Station, sondern ein Zeitversatz (zeitlicher Versatz) bzw. eine Phasenlage zwischen der eigenen Aussendung und dem Empfang des Signals einer jeweils weiteren Referenz-Station. Der zeitliche Versatz bzw. die Phasenlage wird vorzugsweise direkt durch die Referenz-Station (eigenständig) bestimmt. Es ist insbesondere nicht notwendig, dass eine weitere (zusätzliche) Messeinrichtung vorgesehen ist, um den genannten Versatz bzw. die genannte Phasenlage zu bestimmen. Vorzugsweise sind eine, mehrere oder alle Referenz-Stationen stationär (unbeweglich) und/oder die zumindest eine und zumindest empfangene Station mobil.

Unter wellenbasiert wird insbesondere verstanden, dass es sich um zwischen Stationen in Wellenform übertragene Signale handelt, welche in dem Verfahren bzw. einem entsprechenden System verwendet werden. Insbesondere handelt es sich um elektromagnetische Wellen als Signale, die bevorzugt leiterlos, d.h. ohne einen Wellenleiter über Luftschnittstellen übertragen werden. Vorzugsweise handelt es sich bei den in Wellenform übertragenen Signalen um Funksignale, insbesondere in einem Bereich von 500 MHz bis 1 THz.

Insbesondere dienen die Begriffe "Referenz-Station" und "empfangende Station" dazu, für den Verfahrensablauf unterschiedlich wirkende und arbeitende Stationen voneinander zu unterscheiden.

Bevorzugt sind ortsfeste Referenz-Stationen. Unter ortsfest werden hier insbesondere auch Referenz-Stationen verstanden, die sich auf bekannten Trajektorien bewegen. Solche Bewegungen erfolgen dabei insbesondere längs bekannter Orts-Zeit-Profile, so dass zu jedem für Messungen relevanten Zeitpunkt die Position einschließlich räumlicher Ausrichtung einer solchen bewegbaren Referenz-Station bekannt ist.

Die zumindest eine und zumindest empfangende Station kann bevorzugt auch Signale selber aussenden und/oder mit den Referenz-Stationen kommunizieren, d.h. Signale einschließlich Daten und Informationen austauschen. Die empfangende Station ist insbesondere eine mobile Station. Bevorzugt kann sich eine solche mobile Station frei im Raum bewegen, wobei deren momentane Position einschließlich Ausrichtung nicht bekannt sein muss.

Signale können nur einen zeitlich vorgegebenen Verlauf aufweisen. Bevorzugt werden Signale in Form einer Rampe. Signale können alternativ oder zusätzlich auch Daten und Informationen enthalten, welche zwischen zwei oder mehr der verschiedenen Stationen ausgetauscht werden.

Unter ein Aussenden im selben Frequenzbereich fallen insbesondere alle Aussendungen einer Station, die bei niedrigerer Frequenz sind, während die einer anderen Station alle bei höherer Frequenz sind. Dies gilt insbesondere für eine Anordnung, bei der es keine denkbare konstante Trennfrequenz gibt.

Unter hochgenau wird insbesondere genauer als 1 μs verstanden. 1 μs lässt sich mit Standardverfahren, beispielsweise FSK oder mit ZigBee Modulen, aktuell erreichen, wobei für zukünftige Anwendungen auch eine höhere Anforderung an die Genauigkeit ermöglichen, insbesondere genauer als 0,1 μs, insbesondere genauer als 0,001 μs, z.B. durch eine Synchronisation.

Eine bevorzugte Ausgestaltung ist ein Verfahren, bei dem eine Rechen- und/oder Steuereinheit, die nicht Teil einer solchen empfangenden Stationen ist, zumindest eines von den festgestellten Zeitversätzen und Phasenlagen zu einem Datenstrom oder Datensatz verarbeitet, welcher der zumindest einen empfangenden Station durch Datenübertragung übertragen wird.

Die Datenübertragung kann dabei auch auf einem anderen Pfad und/oder Medium übertragen werden als die Signale bzw. Rampen.

Eine bevorzugte Ausgestaltung ist ein Verfahren, bei dem durch mindestens eine empfangende Station oder Referenz-Station zumindest eines von dem zeitlichen Versatz und der Phasenlage mindestens eines Signals, das von einer anderen Station einschließlich empfangender Station und Referenz-Stationen empfangenen wird oder wurde, bestimmt wird.

Das Bestimmen erfolgt insbesondere durch FMCW, OFDM, Pseudo-noise Codierung (Pseudo-Rausch-Kodierung).

Eine bevorzugte Ausgestaltung ist ein Verfahren, bei dem aus empfangenen Signalen bestimmte Messwerte von mindestens drei verschiedenen empfangenden Stationen so verrechnet werden, dass eine rechnerische Größe entsteht, auf die Systemzeiten dieser Stationen bei linear genäherter Betrachtung keinen Einfluss auf die Laufzeitdifferenzen aus den empfangenen Signalen haben.

Unter genäherter Betrachtung wird insbesondere verstanden, dass die Taylorreihe n bei quadratischem Glied abgebrochen wird. Das Verrechnen erfolgt insbesondere, indem Laufzeiten oder Phasen mit geeigneten Gewichten addiert und subtrahiert werden. Die rechnerische Größe sind insbesondere Weglängen und Weglängenunterschiede.

Bei genäherter Betrachtung wird gemäß einer dazu bevorzugten Ausgestaltung die Taylorreihe n bei quadratischem Glied abgebrochen, wobei das Verrechnen insbesondere erfolgt, indem Laufzeiten oder Phasen mit Gewichten addiert und subtrahiert werden und insbesondere die rechnerische Größe Weglängen und Weglängenunterschiede sind.

Eine bevorzugte Ausgestaltung ist ein Verfahren, bei dem aus empfangenen Signalen bestimmte / die Messwerte von mindestens drei verschiedenen empfangenden Stationen verrechnet werden gemäß:

$$\tau_{m,k_1,k_2}(t) = (\tau_{k_1 \to m}(t) - \tau_{k_2 \to m}(t)) + \frac{1}{2}(\tau_{k_2 \to k_1}(t) - \tau_{k_1 \to k_2}(t)) \tag{1.2}$$

Eine bevorzugte Ausgestaltung ist ein Verfahren, bei dem bei einem Einsatz von mehr als drei Stationen aus empfangenen Signalen bestimmte / die Messwerte von mindestens drei verschiedenen empfangenden Stationen verrechnet werden gemäß:

$$\begin{pmatrix} clk_1(t) + T_0 \\ clk_2(t) + T_0 \\ \vdots \\ clk_N(t) + T_0 \end{pmatrix} = A(t) \begin{pmatrix} \tau_{1 \to 2}(t) \\ \tau_{1 \to 3}(t) \\ \vdots \\ \tau_{2 \to 1}(t) \\ \tau_{2 \to 3}(t) \\ \vdots \\ \tau_{N \to (N-1)}(t) \end{pmatrix}, \tag{1.5}$$

insbesondere gemäß:

$$clk_k(t) + T_0 = \frac{1}{2N} \left( \sum_{k' \neq k} \tau_{k' \to k}(t) - \sum_{k' \neq k} \tau_{k \to k'}(t) \right) \tag{1.7}$$

Eine bevorzugte Ausgestaltung ist ein Verfahren, bei dem ein Uhrenoffset der empfangenden Station relativ zu zumindest einer der Referenz-Stationen bestimmt wird.

Eine bevorzugte Ausgestaltung ist ein Verfahren, bei dem als die gesendeten Signale FMCW- oder FSCW-Signale verwendet oder gebildet werden.

Eine bevorzugte Ausgestaltung ist ein Verfahren, bei dem IFDMA oder CDMA als das Multiplexverfahren angewendet wird.

Eine bevorzugte Ausgestaltung ist ein Verfahren, bei dem abhängig von den festgestellten Zeitversätzen ($\tau$1) und/oder Phasenlagen zukünftige Aussendungen der Referenz-Stationen gesteuert werden.

Eine bevorzugte Ausgestaltung ist ein Verfahren, bei dem ein zeitgleiches oder nahezu zeitgleiches Aussenden als ein zeitlich überlappender Sendebetrieb oder Sendebetrieb zwischen zwei Aussendungen einer Station mit einer Ruhezeit kleiner als einer Dauer der Kanalimpulsantwort durchgeführt wird. Ein zeitlicher Überlapp kann vorzugsweise mindestens 10%, weiter vorzugsweise mindestens 25%, noch weiter vorzugsweise mindestens die Hälfte (50%) der Zeitdauer des früheren oder frühesten Signals der mehreren (z.B. zwei) Signale betragen.

Eine bevorzugte Ausgestaltung ist ein wellenbasiertes System mit zumindest zwei Referenz-Stationen, die Signale aussenden und die jeweils zumindest eine Rechen- und/oder Steuereinheit aufweisen, und zumindest einer und zumindest empfangenden Station, die Signale von mindestens zwei der Referenz-Stationen empfängt und die zumindest eine Rechen- und/oder Steuereinheit aufweist, wobei die Rechen- und/oder Steuereinheiten ausgebildet oder eingerichtet sind, jeweils zumindest einen Teil von Verfahrensschritten des vorstehenden Verfahrens durchzuführen und in Gesamtheit das gesamte Verfahren durchführen.

Eine so ausgebildete oder eingerichtete Rechen- und/oder Steuereinheit ist insbesondere ein Prozessor mit zugehörigen Komponenten wie z.B. zumindest einem integrierten oder angeschlossenen Speicher zum Speichern oder Zwischenspeichern von Programmkode zur Verfahrensdurchführung und von Signalen und Daten dazu.

Eine bevorzugte Ausgestaltung ist eine Referenz-Station oder empfangende Station, die ausgebildet oder eingerichtet ist als Komponente eines solchen Systems oder die ausgebildet oder eingerichtet ist zum Durchführen eines solchen Verfahrens.

Eine bevorzugte Ausgestaltung ist eine solche empfangende Station, die eine mobile Station mit einer Bewegungsbahn ist, wobei die Bewegungsbahn insbesondere nicht festgelegt ist.

Eine bevorzugte Ausgestaltung ist eine Referenz-Station mit einer/der Rechen- und/oder Steuereinheit, die abhängig von den festgestellten Zeitversätzen und/oder Phasenlagen zukünftige Aussendungen der Referenz-Stationen Einfluss steuert.

Bereitgestellt wird so ein verbessertes Verfahren zur synthetischen Synchronisation von Pseudolites (deutsch: Funkbaken) in ITDOA- (ITDOA : Inverse Time Difference of Arrival, deutsch inverse Laufzeitdifferenzen der Eintreffzeitpunkt) Positionierungs-Systemen. Insbesondere werden ein System mit einer Anordnung aus Referenz-Stationen und mindestens einer mobilen Station sowie ein Verfahren zur Berechnung von Uhrzeitoffsets in Funksystemen bzw. zur Berechnung von Positionen mit deutlich verringertem Einfluss von Uhrzeitoffsets bereitgestellt. Ermöglicht werden außerdem Phasen-kohärente Messungen. Das System - insbesondere eine entsprechende Anordnung von Stationen - und das Verfahren zur Berechnung von Uhrzeitoffsets in Funksystemen bzw. zur Berechnung von Positionen ermöglichen einen deutlich verringerten Einfluss von Uhrzeitoffsets.

Das System und das Verfahren unterdrücken - abgesehen von der freien Sichtverbindung - die einleitend genannten Grundannahmen und ermöglichen somit eine deutliche Verbesserung bei einer Ortung. Durch das Verfahren entfällt die Notwendigkeit zur direkten hochgenauen Synchronisation. Sogar phasenkohärente Messungen werden ermöglicht.

Die beiden zuletzt genannten Grundannahmen werden dadurch erübrigt, dass dieselbe Aussendung sowohl für die Synchronisation als auch für die Ortung verwendet wird bzw. werden kann. Daher wird nicht die Relation der Systemtakte mittelbar durch Funksignale bestimmt und von dort auf die nächstfolgenden Signale geschlossen, sondern unmittelbar der zeitliche Bezug der verschiedenen für die Ortung relevanten Aussendungen ermittelt.

Die dritte Grundannahme, d.h. Bekanntheit der Länge der Sichtverbindung, wird dadurch erübrigt, dass der Zeitversatz zwischen zwei der Referenzstationen, gleichzeitig während derselben Aussendung von beiden Stationen simultan gemessen wird. Weicht nun die momentane Entfernung von der angenommenen Entfernung ab, so wirkt sich diese auf beide Zeitversatzmessungen genau gegensätzlich aus. Wenn die Gesamtauswertung zur Bestimmung der Uhrenfehler beide Messungen von der ersten zur zweiten Referenz-Station und umgekehrt gleich stark gewichtet so pflanzt sich der Fehler durch ungenaue Entfernungsannahmen in der Synchronisation nicht fort.

Die zweite Grundannahme, d.h. auftretende Mehrwege mit einem ausreichenden Pfadlängen-Unterschied, wird dadurch erübrigt, dass die Messung des Zeitversatzes zwischen zwei der Referenzstationen in beiden Richtungen zeitgleich mit derselben Mittenfrequenz vorgenommen wird bzw. werden kann. Kann ein Mehrweg in einer bestimmten Bandbreite nicht vom Hauptpfad getrennt werden, so kann er die scheinbare Weglänge des Hauptpfades sowohl verkürzen als auch verlängern.

Was in dem zuletzt genannten Fall, dass ein Mehrweg nicht vom Hauptfeld getrennt werden kann, geschieht und in welchem Ausmaß, das hängt von folgenden Größen ab:

- Einem genauen Weglängenunterschied zwischen Hauptpfad und Mehrweg,
- Einem Amplitudenverhältnis zwischen beiden Pfaden,
- Einer verwendeten Mittenfrequenz,
- Einer verwendeten Bandbreite,
- Einer spektralen Leistungsverteilung eines verwendeten RF-Signals (RF: Hochfrequenz) und
- Einer Wahl einer Fensterfunktion auf der Empfangsseite, d.h. insbesondere bei der empfangenden Station sowie den Referenz-Stationen während deren Empfang.

Jeder dieser Einflussfaktoren bzw. Größen wirkt bei entsprechender Verarbeitung an zwei Stellen, so dass die Gesamtwirkung sich im Endergebnis aufhebt. Die bekannten Einflüsse werden strukturell zunächst betrachtet und dann wird einzeln beschrieben, wie dafür gesorgt wird, dass es nicht ins Endergebnis durchschlägt. Dazu wird bevorzugt jeweils eine gleichstarke Wirkung auf die beiden Messungen derselben Strecke nachgewiesen.

Davon sind die beiden ersten Größen kanalabhängig. Bei gleichzeitiger Messung finden beide Messungen insbesondere im selben Kanal statt. Die dritte bis fünfte Größe werden für beide Messungen insbesondere gleich gewählt. Auf diese Weise ist die scheinbare Weglängenänderung für beide Messungen gleich stark und eine solche wirkt sich, wie zuvor gezeigt, nicht auf die bestimmten Uhrenabweichungen aus.

Für die gleichzeitige Messung mit mehreren sendenden Stationen wird ein geeignetes Multiplexverfahren verwendet. Nachfolgend werden beispielhaft verschiedene Verfahren bezüglich ihrer Anwendbarkeit bewertet:

Bei einem TDMA (time division multiple access / deutsch: multipler Zugriff mit Zeitaufteilung) senden die Stationen nicht absolut zeitgleich, sondern zeitlich gestaffelt.
Damit die beiden zuerst genannten Größen sich im Kanal nicht zwischendurch ändern,
wird das Anwendungsumfeld bewertet und eine zeitliche Staffelung ausreichend kurz gehalten. Gerade in beweglichen Szenarien wird dies selten gegeben sein, da es bei der ersten Größe schon auf Verschiebungen um Bruchteile der Wellenlänge ankommt.
Ausreichend kurz bedeutet dabei, dass sich das System innerhalb der Zeit, in der die Messung zuerst in die eine und dann in die andere Richtung durchgeführt wurde, maximal um ein Zehntel der Wellenlänge bewegt hat.

Bei einem FDMA (frequency division multiple access / deutsch: multipler Zugriff mit Frequenzaufteilung) sind die Mittenfrequenzen soweit gegeneinander verschoben, dass die verwendeten Teilbänder sich nicht mehr überlappen. Damit verändert sich jedoch auch die Wellenlänge und dadurch wird die dritte Größe stark verändert. Damit ist die Verwendung von FDMA nicht bevorzugt. Für moderne Verfahren im Frequenzbereich wie beispielsweise OFDMA gelten diese Einschränkung jedoch nicht.

Bei einem OFDMA (orthogonal frequency division multiple access) werden verschiedene Träger eines OFDM-Systems verschiedenen Sendern exklusiv zugeordnet. Dadurch kann erreicht werden, dass die Aussendungen der Stationen im Frequenzbereich sehr fein verschachtelt sind. Eine Schachtelung wird fein genug gewählt, um für jeden Sender alle Merkmale des Kanals im Frequenzbereich sichtbar zu machen. Ansonsten würde die fünfte Größe verletzt werden. Eine fein genug gewählte Schachtelung ist insbesondere ein Schachtelung, bei der innerhalb eines Teilbandes eine Trägerfrequenz liegt. Das Teilband ist dabei so gewählt, das es max. dem inversen des Delayspread des Kanals entspricht. Unter Delayspread versteht man dabei auf Deutsch die Verzögerungsaufspreizung des Kanals.

Bei einer besonders bevorzugten IFDMA (intermediate Frequency division multiple access) werden z.B. FMCW Signale so variiert, dass sie im ZF Bereich (ZF: Zwischenfrequenz) der Empfänger in verschiedene Subbänder fallen. Dadurch sind die Signale trennbar, ohne eine der vorstehenden Größen zu beeinflussen.

Bei einer ebenfalls besonders bevorzugten CDMA (Code division Multiple Access) wird die Aussendung mit einer Stations-spezifischen breitbandigen Pseudo-Noise-Sequenz (Noise deutsch: Rauschen) gemischt. Durch erneute Mischung im Empfänger wird ein bestimmtes Signal wieder aus dem entstandenen Signal-Teppich herausgehoben. Dadurch sind die Signale trennbar, ohne eine der vorstehenden Größen zu beeinflussen.

Ein Ausführungsbeispiel wird nachfolgend anhand der Zeichnung näher erläutert. Gleiche Bezugszeichen in den verschiedenen der Figuren verweisen dabei auf gleiche oder gleich wirkende Komponenten, Signale oder Verfahrensschritte, so dass auch die Ausführungen zur jeweils anderen Figur heranziehbar sind. Es zeigen:

Fig. 1   eine Anordnung mit einer empfangenden Station und sechs ortsfesten Stationen und

Fig. 2   eine weitere Anordnung zur Veranschaulichung von Verfahrensschritten mit einer empfangenden Station und vier ortsfesten Stationen und

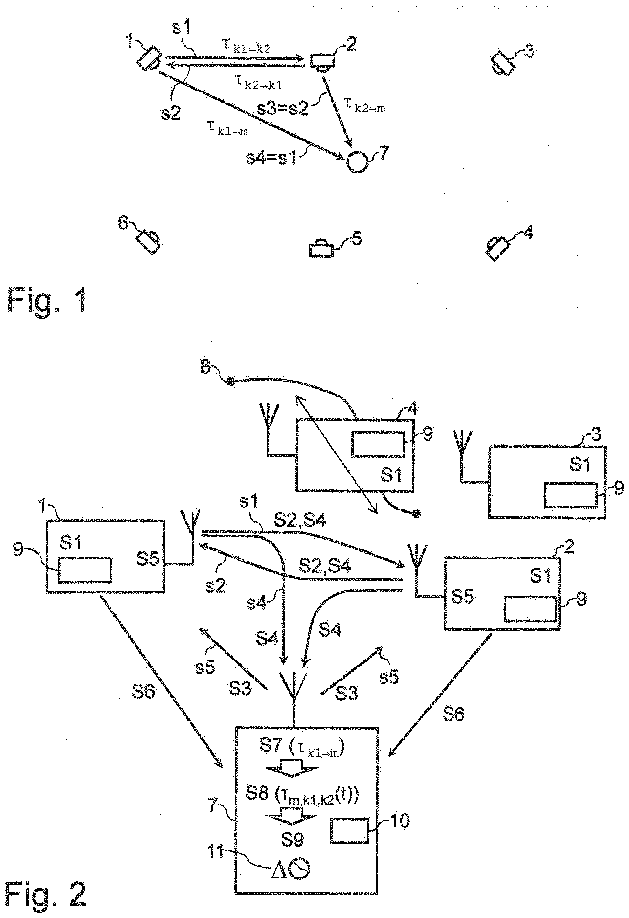

Wie aus Fig. 1 und Fig. 2 ersichtlich, hat eine beispielhafte Anordnung bzw. ein daraus gebildetes System zumindest zwei, hier z.B. sechs ortsfeste Stationen, die lediglich zur begrifflichen Unterscheidbarkeit auch als Referenz-Stationen 1 - 6 bezeichnet werden. Die erste der Referenz-Stationen 1 sendet insbesondere ein erstes Signal s1 an zumindest die zweite der Referenz-Stationen 2. Die zweite der Referenz-Stationen 1 sendet insbesondere ein zweites Signal s2 an zumindest die erste der Referenz-Stationen 1.

Von zumindest einer empfangenden Station 7 sind diese Signale s1, s2 der ersten Referenz-Station 1 bzw. der zweiten Referenz-Station 2 empfangbar und werden nach deren Empfang von dieser empfangenden Station 7 verwendet. Zur Unterscheidbarkeit werden dabei die von der empfangenden Station 7 empfangenen Signale s1, s2 auch mit den Bezugszeichen s3 bzw. s4 verwendet. Der Begriff empfangende Station 7 dient hier lediglich zur begrifflichen Unterscheidbarkeit gegenüber den Referenz-Stationen 1 - 6. Insbesondere kann die empfangende Station 7 auch selber als eine auch sendende Station ausgebildet sein. Insbesondere ist die empfangende Station 7 als eine mobile Station ausgebildet.

Zur Darstellung in Formeln werden die Referenz-Stationen 1 -6 auch mit den Buchstaben $k_1$, $k_2$, ... $k_6$ bezeichnet und die empfangende Station 7 mit m.

Nach Auswahl insbesondere eines der vorstehend bezeichneten Multiplexverfahren kann jede ortsfeste Referenz-Station k bzw. k1 - k6 und/oder mobile Station m laufend die in ihrem Empfangssignal festgestellten pseudo-Zeitversätze und Phasenlagen gegenüber allen ortsfesten, also sendenden Stationen k bestimmen. Dies sind hier z.B. $\tau_{k1 \rightarrow k2}$ als Zeitversatz zwischen den ersten beiden Stationen k1 und k2; Der Zeitversatz beinhaltet dabei Uhrenversatz zwischen den Stationen und die gemessene Laufzeit. $\tau_{k2\rightarrow k1}$ als Zeitversatz in umgekehrter Senderichtung zwischen den ersten beiden Referenz-Stationen k2 und k1; $\tau_{k1\rightarrow m}$ als Zeitversatz zwischen der ersten Referenz-Station k1 und der empfangenden Station m und $\tau_{k2\rightarrow m}$ als Zeitversatz zwischen der zweiten Referenz-Station k2 und der empfangenden Station m. Entsprechendes gilt für die verschiedenen $\varphi_{k\rightarrow m}$ als Phase zwischen Stationen, z.B. k und m, und $\Delta\varphi_{k\rightarrow m}(t)$ als Phasendifferenz bzw. Phasenlage zwischen Stationen, z.B. k und m zur Zeit t.

Die Bestimmung erfolgt insbesondere gemäß

$$\tau_{k\rightarrow m}(t) = clk_m(t) - clk_k(t) + c_0^{-1}\tilde{d}_{k,m}(t)$$

$$\Delta\varphi_{k\rightarrow m}(t) = \varphi_{LO,m}(t) - \varphi_{LO,k}(t) + \frac{2\pi}{\lambda}\tilde{d}_{k,m}(t) \tag{1.1}$$

Dabei bezeichnet $\tilde{d}_{k,m}(t)$ einen ggf. durch Mehrwege gestörten Abstand im Funkkanal zwischen den Stationen k und m zu der Zeit t. Außerdem bezeichnet $clk_k(t)$ die Systemzeit innerhalb der Signalerzeugungseinheit der Station k zum Zeitpunkt t. Es bezeichnet $\varphi_{LO,k}(t)$ die Phasenlage des Lokaloszillators in einer Signalerzeugungseinheit der Station k zum Zeitpunkt t. Aus diesen Werten wird dann der Laufzeitunterschied zwischen den Pfaden $k_1$->m, $k_2$->m zwischen der ersten Referenz-Station 1; k1 bzw. der zweiten Referenz-Station 2; $k_2$ einerseits und andererseits der empfangenden Station 7; m berechnen. Dies erfolgt insbesondere mittels

$$\tau_{m,k_1,k_2}(t) = \left(\tau_{k_1\rightarrow m}(t) - \tau_{k_2\rightarrow m}(t)\right) + \frac{1}{2}\left(\tau_{k_2\rightarrow k_1}(t) - \tau_{k_1\rightarrow k_2}(t)\right) \tag{1.2}$$

Der Klammerterm ist eingeführt, um die durch unterschiedliche Uhren entstehenden Fehler je zur Hälfte einem der beiden Übertragungspfade zuzuordnen.

Wären die beteiligten Uhren ideal synchron, so wäre hier die erste Klammer bereits der gewünschte Laufzeitunterschied und die zweite Klammer ergäbe aufgrund der Kanalsymmetrie Null. Kommen nun die Abweichungen der realen Uhren ins Spiel, so zeigt sich, dass diese den Rechenwert nicht beeinflussen, da sich der Einfluss des Uhrenfehlers auf den ersten und den zweiten Term gerade aufhebt. Somit bildet der zweite Term immer die erforderlichen Korrekturen für Uhrenfehler im ersten Term. Der berechnete Wert $\tau_{m,k1,k2}(t)$ stellt schließlich den Abstandsunterschied der mobilen zu beiden ortsfesten Stationen - d.h. der empfangenden Station 7 und den Referenz-Stationen 1, 2; $k_1$, $k_2$-dar, aber ohne Einfluss der beteiligten Uhren und der Kanaleigenschaften zwischen den beiden ortsfesten Stationen.

$$\tau_{m,k_1,k_2}(t) = c_0^{-1}\left(\tilde{d}_{k_1,m}(t) - \tilde{d}_{k_2,m}(t)\right) \tag{1.3}$$

Mehrwege zwischen der mobilen Station 7; m und den ortsfesten Referenz-Stationen 1, 2; $k_1$, $k_2$ sind immer noch genauso einflussreich, wie bei jeder anderen Synchronisationsart, aber die übrigen Einflüsse sind so gut wie ausgemerzt.

Von großem Vorteil ist, dass neben der TDOA-Laufzeitmessung jetzt auch TDOA-Phasenmessungen zur Verfügung stehen. Das eröffnet erstmals die Tür zu interessanten kohärenten Auswerteverfahren.

Es wird demnach bevorzugt berechnet:

$$\Delta\varphi_{m,k_1,k_2}(t) = \left(\Delta\varphi_{k_1\rightarrow m}(t) - \Delta\varphi_{k_2\rightarrow m}(t)\right) + \frac{1}{2}\left(\Delta\varphi_{k_2\rightarrow k_1}(t) - \Delta\varphi_{k_1\rightarrow k_2}(t)\right) \tag{1.4}$$

Dieser Wert $\Delta\varphi_{m,k1,k2}(t)$ stellt den Phasenunterschied der beiden relevanten Pfade dar, ohne von den Phasenlagen der beteiligten Oszillatoren abhängig zu sein. Hierbei kann es je nach Implementierung zu 180 Grad-Phasensprüngen kommen. Ein Phasenrauschen der beteiligten Stationen m, $k_1$, $k_2$ sollte noch gut genug sein, um eine Messung überhaupt durchführen zu können, aber der letztlich verwendete Wert hängt in seiner Genauigkeit nur vom Empfängerrauschen ab. Bessere Oszillatoren werden hier die realisierbaren Integrationszeiten verlängern und auf diesem Umweg eine Genauigkeit der Phasenlagen der beteiligten Oszillatoren $\Delta\varphi_{m,k_1,k_2}(t)$ beeinflussen, aber eine direkte Beeinträchtigung durch das Phasenrauschen ist nicht mehr gegeben.

Das gleiche Prinzip kann vorteilhaft durch einen alternativen Datenfluss mit anderen Berechnungsschritten genutzt werden. Hierzu wird zentral aus den Messungen der Referenz-Stationen 1, 2, ..., 6 der Zeitversatz $\tau_{1\rightarrow2}$, $\tau_{1\rightarrow3}$, $\tau_{1\rightarrow4}$, ... $\tau_{2\rightarrow2}$, $\tau_{2\rightarrow3}$, ... $\tau_{N\rightarrow(N-1)}$ mit N als höchster Nummer der Referenz-Stationen bestimmt:

$$\begin{pmatrix} clk_1(t)+T_0 \\ clk_2(t)+T_0 \\ \vdots \\ clk_N(t)+T_0 \end{pmatrix} = A(t) \begin{pmatrix} \tau_{1\rightarrow2}(t) \\ \tau_{1\rightarrow3}(t) \\ \vdots \\ \tau_{2\rightarrow1}(t) \\ \tau_{2\rightarrow3}(t) \\ \vdots \\ \tau_{N\rightarrow(N-1)}(t) \end{pmatrix} \tag{1.5}$$

Hierdurch werden an zentraler Stelle alle Uhren bzw. Uhrenfehler bis auf ein Offset (deutsch einen Versatz) bestimmt.

Eine dazu erforderliche Matrix A(t) wird so ausgelegt, dass die Werte $\tilde{d}_{k,m}(t)$ im Kern von A(t) wirken und daher keinen Einfluss auf die ermittelten Werte haben. Die verbleibenden Freiheitsgrade von A(t) können dazu genutzt werden, die Fehlerfortpflanzung des Empfängerrauschens zu minimieren.

Eine mögliche Matrix A(t) für den Fall, das alle Messungen vorliegen, wäre:

$$A(t) = \frac{1}{2N} \begin{pmatrix} -1 & \dots & -1 & 1,0 & \dots & 0 & 1 & 0 & \dots & 1 & 0 & \dots \\ 1,0,0 & \dots & 0 & -1,-1 & \dots & -1 & 0,1,0 & & & & & \\ 0,1,0 & \dots & 0 & 0,1,0 & \dots & 0 & 0,0,1 & & & & & \\ & \dots & 0 & & & & & & & & & \end{pmatrix} \tag{1.6}$$

Dadurch nimmt (1.5) folgende Form an:

$$clk_k(t)+T_0 = \frac{1}{2N}\left( \sum_{k'\neq k} \tau_{k'\rightarrow k}(t) - \sum_{k'\neq k} \tau_{k\rightarrow k'}(t) \right) \tag{1.7}$$

Dabei steht T0 für einen Offset bzw. Versatz zu einem beliebigen Startzeitpunkt der Messung. Der Offset ist für die weiteren Berechnungen nicht relevant, da diese nur die Differenzen zwischen den Stationen benötigen. Diese Daten können dann über Datenfunk, z.B. ZigBee, WLAN (drahtloses lokales Netz) oder GSM (ein Mobilfunkstandard) der einen oder mehreren mobilen Stationen m zur Verfügung gestellt werden. Solche mobilen Stationen m berechnen dann:

$$\tau_{m,k_1,k_2}(t) = (\tau_{k_1\rightarrow m}(t) - \tau_{k_2\rightarrow m}(t)) + (clk_{k_1}(t) - clk_{k_2}(t)) \tag{1.8}$$

Betrachtet man den vorherigen Spezialfall, in dem zunächst nur zwei ortsfeste Stationen $k_1$ und $k_2$ ausgewertet werden, so wird A(t) aus (1.6) zu einer 2x2-Matrix und (1.5) wird zu

$$\begin{pmatrix} clk_{k1}(t) + T_0 \\ clk_{k2}(t) + T_0 \end{pmatrix} = \frac{1}{4}\begin{pmatrix} -1 & 1 \\ 1 & -1 \end{pmatrix}\begin{pmatrix} \tau_{k1->k2}(t) \\ \tau_{k2->k1}(t) \end{pmatrix} \tag{1.9}$$

Für diesen Spezialfall gilt:

$$clk_{k1}(t) - clk_{k2}(t) = \frac{1}{2}\left(\tau_{k2->k1}(t) - \tau_{k1->k2}(t)\right) \tag{1.10}$$

Dadurch ist die Äquivalenz zwischen (1.8) und (1.2) erkennbar.

Eine derart zentralisierte Berechnung ist ebenso für die Phasen möglich:

$$\begin{pmatrix} \varphi_{LO,1}(t) + \varphi_0 \\ \varphi_{LO,2}(t) + \varphi_0 \\ \vdots \\ \varphi_{LO,N}(t) + \varphi_0 \end{pmatrix} = A(t)\begin{pmatrix} \Delta\varphi_{1->2}(t) \\ \Delta\varphi_{1->3}(t) \\ \vdots \\ \Delta\varphi_{2->1}(t) \\ \Delta\varphi_{2->3}(t) \\ \vdots \\ \Delta\varphi_{N->(N-1)}(t) \end{pmatrix} \tag{0.01}$$

Es bezeichnet $\varphi_0$ den Phasenoffset zu einem Beobachter. Dabei ist der Phasenoffset für alle Stationen gleich und damit nicht von Bedeutung, da in weiteren Schritten die Differenzen der einzelnen Station verwendet werden.

Bevorzugt werden die Eingangsdaten entlang der Zeitachse einem unwrapping (deutsch: abgewickelte Phase, d.h. Phase über 360°, kontinuierlich über die Periode hinaus, dargestellt) zu unterzogen, da Sprünge um 360 Grad durch die nichtganzzahlige Wirkung von A(t) zu Phasensprüngen mit signifikanten Winkeln führen könnten. Alternativ können auch Auswertungen nach (1.4) herangezogen werden, um die Mehrdeutigkeit aufzulösen.

Diese Daten können dann über Datenfunk, z.B. ZigBee, WLAN oder GSM den mobilen Stationen 7; m zur Verfügung gestellt werden. Die mobilen Stationen 7; m berechnen dann:

$$\Delta\varphi_{m,k_1,k_2}(t) = \left(\Delta\varphi_{k_1->m}(t) - \Delta\varphi_{k_2->m}(t)\right) + \left(\varphi_{LO,1}(t) - \varphi_{LO,2}(t)\right) \tag{1.12}$$

Je nach Ausgestaltung des Systems ist es denkbar, dass sich die Phasen $\varphi_{k1->m1 \text{ bzw. } k2->m2 \text{ bzw. } k1->k2 \text{ bzw. } k2->k1}$ der empfangenen Signale auch während eines Messvorganges ändern. Dann kann diese Auswertung für einzelne zeitliche Abschnitte der ausgetauschten Signale angewandt werden. Dies lässt sich speziell bei FMCW gut mit existierenden Architekturen wie folgt verwirklichen. Vorteilhaft ist bei einer FMCW-basierten Anwendung diese Berechnung auch innerhalb einer Rampe laufend vorzunehmen. Solche Rampen werden von den Referenz-Stationen 1 - 6; k und der empfangenden Station 7; m erzeugt und zumindest von den Referenz-Stationen ausgesendet als die Signale s1, s2; bzw. s3, s4. Dazu wird das im jeweiligen Empfänger gewonnene Beatsignal (deutsch: Zwischenfrequenzsignal) zunächst durch ein Software-Bandpass-Filter gefiltert. Dieses Bandpass-Filter wird im Durchlassbereich auf den durch die Applikation zu erwartenden Frequenzbereich zugeschnitten. Die oben angegebene Addition der Phasen lässt sich dann kontinuierlich durch eine komplexe Multiplikation der entsprechenden Beatsignale erreichen. Die auftretende Halbierung der Phase $\varphi_{k1->m1 \text{ bzw. } k2->m2 \text{ bzw. } k1->k2 \text{ bzw. } k2->k1}$ der/des empfangenen Signale $s_{k1->m1 \text{ bzw. } k2->m2 \text{ bzw. } k1->k2 \text{ bzw. } k2->k1}$ kann gemäß einem Weg durch eine komplexe Quadrat-Wurzel realisiert werden, wobei jeweils das richtige Vorzeichen zu wählen ist, so dass das resultierende Beatsignal $s_{k1->m1 \text{ bzw. } k2->m2 \text{ bzw. } k1->k2 \text{ bzw. } k2->k1}$ der/des Stationen 1-6 u, k und der empfangenden Station 7;m kontinuierlich bleibt. Gemäß einem anderen Weg wird der Gesamtphasenterm verdoppelt, und man erhält:

$$2 \cdot \Delta\varphi_{m,k_1,k_2}(t) = 2 \cdot \left(\Delta\varphi_{k_1->m}(t) - \Delta\varphi_{k_2->m}(t)\right) + \left(\Delta\varphi_{k_2->k_1}(t) - \Delta\varphi_{k_1->k_2}(t)\right) \tag{1.13}$$

Da durch die komplexe Multiplikation der Beatsignale der Zeitbereich gefaltet wird, entstehen auf diese Weise viele zusätzliche Ziele. Sie sind deutlich schwächer als der durch die line-of-sight (deutsch: Sichtlinie bzw. Sichtverbindung) erzeugte Peak(deutsch: Spitze bzw. Spitzenwert), aber zahlreich. Im Gegenzug wird durch die kontinuierliche Phasenauswertung auch das Phasenrauschen innerhalb einer Messung unterdrückt, so dass die einzelnen Peaks nicht mehr durch das Phasenrauschen der beteiligten Oszillatoren aufgeweitet werden können.

Insbesondere Fig. 2 zeigt einen beispielhaften Ablauf in z.B. einer FMCW-basierten Realisierung. Die Verfahrensschritte laufen dabei optional teilweise parallel oder in geänderter Reihenfolge ab. Skizziert ist außerdem eine Trajektorie 8, d.h. eine örtlich und zeitlich bekannte Bewegungsbahn einer der Referenz-Stationen 4, so dass die Referenz-Station 4 dadurch mittels entsprechender Erweiterung der Berechnung ebenfalls als ortsfest ansehbar ist. Außerdem sind Rechen- und/oder Steuereinheiten 9, 10 skizziert, in welchen Berechnungen zur Durchführung des Verfahrens durchführbar sind. Ein auszugleichender Uhrenoffset 11 ist ebenfalls skizziert.

In einem ersten Verfahrensschritt S1 werden durch ein bekanntes Verfahren, LPR nach US 7,940,743, Cherrysync nach US2009222589, ... alle Stationen, d.h. alle nachfolgend beteiligten Referenz-Stationen k; 1 - 2 - ... N und alle beteiligten empfangenden Stationen /; m vorsynchronisiert.

In einem zweiten Verfahrensschritt S2 senden zu einem vereinbarten Zeitpunkt alle ortsfesten bzw. Referenz-Stationen k; 1 - 2 als das Signal s1, s2 bzw. s3, s4 eine FMCW-Rampe mit einer Steigung von rein beispielsweise 1GHz/1ms im 61GHz Band. Dabei gibt es ein Stations-spezifisches Offset in rein beispielsweise einem 250kHz-Raster. Steigungen können liegen im Bereich von insbesondere 100 MHz in 100 ms bis zu 10 GHz in 100$\mu$s, das Band im Bereich von insbesondere 2,4 bis 240 GHz und das Raster im Bereich von insbesondere 5 kHz bis 500 MHz.

In einem dritten Verfahrensschritt S3 führen alle mobilen bzw. empfangenden Stationen 7 mit ihrem Lokaloszillator zu gleicher Zeit ebenfalls eine Rampe mit dieser Steigung aus. Unter gleicher Zeit ist eine Zeit zu verstehen, in der alle Rampen in das Empfangsfenster der übrigen Stationen fallen. Dies ist insbesondere mit einer maximalen Abweichung von einer halben Rampendauer oder geringer erfüllt.

In einem vierten Verfahrensschritt S4 empfangen sowohl die ortsfesten als auch die mobilen Stationen k, m; 1 - 6, 7 die ausgesandten Rampen bzw. Signale s1, s2; s3, s4, s5 und trennen diese in der ZF (ZF: Zwischenfrequenz bzw. Zwischenfrequenzebene) mittels iFDMA.

Die Rampe bzw. das Signal s5 von der mobilen bzw. empfangende Station 7 ist optional. Die empfangende Station 7 muss ihre Rampe nicht senden, sondern kann diese auch nur lokal halten. Es kann aber eine weitere Ausgestaltung sein, wenn die empfangende Station 7 dieses Signal s5 ebenfalls sendet und dadurch die Position auch von den anderen bestimmt werden kann. In diesem Fall wird die empfangende Station vergleichbar zu einer Referenz-Station.

In einem fünften Verfahrensschritt S5 bestimmt jede ortsfeste bzw. Referenz-Station k; 1 - 2 für die eintreffenden Signale aller übrigen ortsfesten bzw. Referenz-Stationen 2 - 1; k' als Messwert den Zeitversatz:

$$\tau_{k'->k}(t) \tag{1.14}$$

In einem sechsten Verfahrensschritt S6 veröffentlicht jede Referenz-Station k; 1 - 6 per Datenfunk, z.B. ZigBee, WLAN oder andere Übertragungsstandards diese Werte bzw. Zeitversätze $\tau_{k'->k}(t)$.

In einem siebten Verfahrensschritt S7 hat die mobile bzw. empfangende Station m; 7 ihrerseits die entsprechenden Messwerte $\tau_{k'->m}(t)$ zwischen sich und den jeweiligen Referenz-Stationen k, k'; 1, 2 bestimmt. Die mobile bzw. empfangende Station m; 7 empfängt die Datentelegramme mit den Werten $\tau_{k_1->k2k_2}(t)$ für alle Paare $k_1, k_2$ aus sendenden der Referenz-Stationen 1 - 6.

In einem achten Verfahrensschritt S8 berechnet die mobile Station $\tau_{m,k1}, k_2(t)$ für alle Paare $k_1, k_2$ aus sendenden der Referenz-Stationen 1 - 6 und kennt damit TDOA-Werte (TDOA: time difference of arrival, deutsch: Zeitunterschiede der Eintreffzeitpunkte) zwischen den empfangenen Signalen der Referenzstationen 1 - 6, deren Genauigkeit nicht durch die Genauigkeit der Vorsynchronisation und die übrigen diskutierten Faktoren beeinträchtigt ist.

In einem neunten Verfahrensschritt S9 erfolgt optional eine Korrektur eines Uhrenoffsets und/oder eine Ortsbestimmung aus diesen TDOA-Werten in für sich bekannter Weise, z.B. gemäß Bancroft oder Kalman-Filter.

Unter synchronisieren oder Synchronisation werden auch Ausgestaltungen verstanden, die eine "indirekte" Synchronisation beinhalten. D.h. dass beispielsweise nur die Uhrenoffsets mitgeführt werden, ohne z.B. Quarze glattzuziehen.

Bezugszeichenliste:

1 - 6    Referenz-Stationen
7        empfangende Station, insbesondere mobile Station

| 8 | Trajektorie |
|---|---|
| 9 | Rechen- und/oder Steuereinheit |
| 10 | Rechen- und/oder Steuereinheit |
| 11 | Uhrenoffset |

| $clk_k(t)$ | Abstand im Funkkanal zwischen den Stationen k und m |
|---|---|
| s1 - s4 | Signale |
| s5 | optionales Signal von der empfangenden Station |
| S1 - S9 | Verfahrensschritte |
| t | Zeit |
| $\tau_{m,k1,k2}(t)$ | Abstandsunterschied der mobilen zu beiden ortsfesten Stationen |
| $\tau_{k\to m}$ | Zeitversatz zwischen Stationen k und m |
| $\varphi_{k\to m}$ | Phase zwischen Stationen k und m |
| $\Delta\varphi_{k\to m}$ | Phasendifferenz zwischen Stationen k und m |
| $\Delta\varphi_{m,k1,k2}(t)$ | Phasenunterschied der relevanten Pfade |

**Patentansprüche**

1. Verfahren, bei dem zumindest zwei Referenz-Stationen (1, 2) Signale (s1, s2; s3, s4) aussenden,

   - wobei die Signale

      - etwa zeitgleich ausgesandt werden (S1, S2),
      - im selben Frequenzbereich ausgesandt werden,
      - durch ein Multiplexverfahren trennbar sind,

   - wobei mindestens eine der Referenz-Stationen (1, 2) neben der Aussendung des eigenen Signals (s1, s2) auch mindestens ein von einer anderen Referenz-Station (2, 1) zeitgleich gesendetes Signal (s2, s1) empfängt und einen zeitlichen Versatz (τ1) und/oder eine Phasenlage zwischen der eigenen Aussendung und dem Empfang hochgenau bestimmt und
   - wobei zumindest eine und zumindest empfangende Station (7) die Signale (s3, s4) von mindestens zwei der Referenz-Stationen (1, 2) empfängt
   - wobei abhängig von den festgestellten Zeitversätzen (τ1) und/oder Phasenlagen zukünftige Aussendungen der Referenz-Stationen (1, 2) gesteuert werden.

2. Verfahren nach Anspruch 1, bei dem eine Rechen- und/oder Steuereinheit (9), die nicht Teil einer solchen empfangenden Stationen (7) ist, zumindest eines von den festgestellten Zeitversätzen (τ1, τ2) und Phasenlagen zu einem Datenstrom (S6) oder Datensatz verarbeitet, welcher der zumindest einen empfangenden Station (7) durch Datenübertragung übertragen wird.

3. Verfahren nach Anspruch 1 oder 2, bei dem durch mindestens eine empfangende Station oder Referenz-Station (1, 2, 7) zumindest eines von dem zeitlichen Versatz (τ1, τ2) und der Phasenlage mindestens eines Signals (s2, s1; s3, s4), das von einer anderen Station einschließlich empfangender Station und Referenz-Stationen (2, 1, 7) empfangen wird oder wurde, bestimmt wird.

4. Verfahren nach einem vorstehenden Anspruch, bei dem aus empfangenen Signalen (s2, s1; s3, s4) bestimmte Messwerte von mindestens drei verschiedenen empfangenden Stationen (1, 2, 7) so verrechnet werden, dass eine rechnerische Größe entsteht, auf die Systemzeiten dieser Stationen (1, 2, 7) bei linear genäherter Betrachtung keinen Einfluss
haben.

5. Verfahren nach einem vorstehenden Anspruch, bei dem aus empfangenen Signalen (s2, s1; s3, s4) bestimmte / die Messwerte von mindestens drei verschiedenen empfangenden Stationen (1, 2, 7) verrechnet werden gemäß:

$$\tau_{m,k_1,k_2}(t) = \left(\tau_{k_1\to m}(t) - \tau_{k_2\to m}(t)\right) + \frac{1}{2}\left(\tau_{k_2\to k_1}(t) - \tau_{k_1\to k_2}(t)\right) \tag{1.2}$$

6. Verfahren nach einem vorstehenden Anspruch, bei dem bei einem Einsatz von mehr als drei Stationen (1, 2, 3, 7) aus empfangenen Signalen (s2, s1; s3, s4) bestimmte / die Messwerte von mindestens drei verschiedenen empfangenden Stationen (1, 2, 7) verrechnet werden gemäß:

$$\begin{pmatrix} clk_1(t) + T_0 \\ clk_2(t) + T_0 \\ \vdots \\ clk_N(t) + T_0 \end{pmatrix} = A(t) \begin{pmatrix} \tau_{1\to2}(t) \\ \tau_{1\to3}(t) \\ \vdots \\ \tau_{2\to1}(t) \\ \tau_{2\to3}(t) \\ \vdots \\ \tau_{N\to(N-1)}(t) \end{pmatrix} \qquad (1.5)$$

insbesondere gemäß:

$$clk_k(t) + T_0 = \frac{1}{2N}\left( \sum_{k'\neq k} \tau_{k'\to k}(t) - \sum_{k'\neq k} \tau_{k\to k'}(t) \right) \qquad (1.7)$$

7. Verfahren nach einem vorstehenden Anspruch, bei dem ein Uhrenoffset der empfangenden Station (7) relativ zu zumindest einer der Referenz-Stationen (1, 2) bestimmt wird.

8. Verfahren nach einem vorstehenden Anspruch, bei dem als die gesendeten Signale (s1, s2; s3, s4) FMCW- oder FSCW-Signale verwendet oder gebildet werden.

9. Verfahren nach einem vorstehenden Anspruch, bei dem IFDMA oder CDMA als das Multiplexverfahren angewendet wird.

10. Verfahren nach einem vorstehenden Anspruch, bei dem ein zeitgleiches oder etwa zeitgleiches Aussenden als ein zeitlich überlappender Sendebetrieb oder Sendebetrieb zwischen zwei Aussendungen einer Station mit einer Ruhezeit kleiner als einer Dauer der Kanalimpulsantwort durchgeführt wird.

11. System mit

- zumindest zwei Referenz-Stationen (1, 2), die Signale (s1, s2; s3, s4) aussenden und die jeweils zumindest eine Rechen- und/oder Steuereinheit (9) aufweisen, und
- zumindest einer und zumindest empfangenden Station (7), die Signale (s3, s4) von mindestens zwei der Referenz-Stationen (1, 2) empfängt und die zumindest eine Rechen- und/oder Steuereinheit (10) aufweist,
- wobei die Rechen- und/oder Steuereinheiten (9, 10) ausgebildet oder eingerichtet sind, jeweils zumindest einen Teil von Verfahrensschritten des Verfahrens nach einem vorstehenden Anspruch durchzuführen und in Gesamtheit das gesamte Verfahren durchführen.

12. Referenz-Station (1, 2), die zum Durchführen eines Verfahrens nach einem der Ansprüche 1 bis 10 eingerichtet ist, wobei die Referenz-Station (1, 2) neben der Aussendung des eigenen Signals (s1, s2) auch mindestens ein von einer anderen Referenz-Station (2, 1) zeitgleich gesendete Signal (s2, s1) empfängt und einen zeitlichen Versatz ($\tau 1$) und/oder eine Phasenlage zwischen der eigenen Aussendung und dem Empfang hochgenau bestimmt, wobei die Referenz-Station (1, 2) ferner eine Rechen- und/oder Steuereinheit (9) aufweist, die abhängig von den festgestellten Zeitversätzen ($\tau 1$) und/oder Phasenlagen zukünftige Aussendungen der Referenz-Stationen (1, 2) steuert.

**Claims**

1. A method in which at least two reference stations (1, 2) transmit signals (s1, s2; s3, s4),

- wherein the signals

- are transmitted approximately at the same time (S1, S2),
- are transmitted in the same frequency range,
- are separable using a multiplexing method,

- wherein at least one of the reference stations (1, 2), besides transmitting its own signal (s1, s2), also receives at least one signal (s2, s1) sent by another reference station (2, 1) at the same time and determines a time stagger ($\tau$1) and/or a phase angle between its own transmission and the reception with high precision, and
- wherein at least one station (7) which at least receives signals receives the signals (s3, s4) from at least two of the reference stations (1, 2),
- wherein future transmissions of the reference stations (1, 2) are controlled depending on the determined time offsets ($\tau$1) and/or phase angles.

2. The method according to claim 1, in which a computing and/or control unit (9), which is not part of a receiving station (7) of this kind, processes at least one of the defined time staggers ($\tau$1, $\tau$2) and phase angles to form a data stream (S6) or data set, which is transferred to the at least one receiving station (7) by data transfer.

3. The method according to claim 1 or 2, in which, by means of at least one receiving station or reference station (1, 2, 7), at least one of the time stagger ($\tau$1, $\tau$2) and the phase angle of at least one signal (s2, s1; s3, s4) that is or has been received by another station, including receiving station and reference stations (2, 1, 7), is determined.

4. The method according to any one of the preceding claims, in which measured values, determined from received signals (s2, s1; s3, s4), from at least three different receiving stations (1, 2, 7) are calculated such that a mathematical variable is created, which remains uninfluenced by system times of these stations (1, 2, 7) with linear approximation.

5. The method according to any one of the preceding claims, in which measurement values determined from received signals (s2, s1; s3, s4) / the measurement values from at least three different receiving stations (1, 2, 7) are calculated in accordance with:

$$\tau_{m,k_1,k_2}(t) = (\tau_{k_1->m}(t) - \tau_{k_2->m}(t)) + \frac{1}{2}(\tau_{k_2->k_1}(t) - \tau_{k_1->k_2}(t)) \qquad (1.2)$$

6. The method according to any one of the preceding claims, in which, with use of more than three stations (1, 2, 3, 7), measurement values determined from received signals (s2, s1; s3, s4) / the measurement values from at least three different receiving stations (1, 2, 7) are calculated in accordance with:

$$\begin{pmatrix} clk_1(t) + T_0 \\ clk_2(t) + T_0 \\ \vdots \\ clk_N(t) + T_0 \end{pmatrix} = A(t) \begin{pmatrix} \tau_{1->2}(t) \\ \tau_{1->3}(t) \\ \vdots \\ \tau_{2->1}(t) \\ \tau_{2->3}(t) \\ \vdots \\ \tau_{N->(N-1)}(t) \end{pmatrix}, \qquad (1.5)$$

in particular in accordance with:

$$clk_k(t) + T_0 = \frac{1}{2N}\left(\sum_{k'\neq k}\tau_{k'->k}(t) - \sum_{k'\neq k}\tau_{k->k'}(t)\right) \qquad (1.7)$$

7. The method according to any one of the preceding claims, in which a clock offset of the receiving station (7) is determined relative to at least one of the reference stations (1, 2).

8. The method according to any one of the preceding claims, in which FMCW or FSCW signals are used or formed as the sent signals (s1, s2; s3, s4).

9. The method according to any one of the preceding claims, in which IFDMA or CDMA is applied as multiplexing method.

10. The method according to any one of the preceding claims, in which a transmission at the same time or approximately at the same time is performed as a temporally overlapping sending operation or sending operation between two transmissions of a station with a rest time shorter than the duration of the channel pulse response.

11. A system with

   - at least two reference stations (1, 2), which transmit signals (s1, s2; s3, s4) and which each have at least one computing and/or control unit (9), and
   - at least one station (7), which at least receives signals and receives the signals (s3, s4) from at least two of the reference stations (1, 2) and comprises the at least one computing and/or control unit (10),
   - wherein the computing and/or control units (9, 10) are configured or designed to each perform at least some of the method steps of the method according to any one of the preceding claims and as a whole to perform the entire method.

12. A reference station (1, 2) which is designed to carry out a method according to any one of claims 1 to 10,

   wherein the reference station (1, 2), besides transmitting its own signal (s1, s2), also receives at least one signal (s2, s1) sent by another reference station (2, 1) at the same time and determines a time stagger ($\tau$1) and/or a phase angle between its own transmission and the reception with high precision,
   wherein the reference station (1, 2) also has a computing and/or control unit (9), which controls future transmissions of the reference stations (1, 2) depending on the determined time staggers ($\tau$1) and/or phase angles.

**Revendications**

1. Procédé dans lequel au moins deux stations de référence (1, 2) émettent des signaux (s1, s2 ; s3, s4),

   - lesquels signaux

      - sont émis à peu près en même temps (S1, S2),
      - sont émis dans la même bande de fréquences,
      - peuvent être séparés par un procédé de multiplexage,

   - dans lequel au moins une des stations de référence (1, 2) non seulement émet son propre signal (s1, s2) mais reçoit aussi un signal (s2, s1) émis par une autre station de référence (2, 1) et détermine avec une grande précision un décalage dans le temps (T1) et/ou une position de phase entre sa propre émission et la réception et
   - dans lequel au moins une station au moins réceptrice (7) reçoit les signaux (s3, s4) d'au moins deux des stations de référence (1, 2),
   - dans lequel les émissions futures des stations de référence (1, 2) sont commandées en fonction des décalages temporels (T1) et/ou positions de phase constatés.

2. Procédé selon la revendication 1, dans lequel une unité de calcul et/ou de commande (9) qui ne fait pas partie de l'une de ces stations réceptrices (7) traite au moins un des décalages temporels (T1, T2) et des positions de phase constatés pour former un flux de données (S6) ou un ensemble de données qui est transmis à au moins une station réceptrice (7) par transmission de données.

3. Procédé selon la revendication 1 ou 2, dans lequel au moins une station réceptrice ou station de référence (1, 2, 7) détermine au moins soit le décalage temporel (T1, T2), soit la position de phase d'au moins un signal (s2, s1 ; s3, s4) qui est ou a été reçu par une autre station, y compris une station réceptrice et les stations de référence (2, 1, 7).

4. Procédé selon une revendication précédente, dans lequel certaines valeurs de mesure sont calculées à partir des signaux (s2, s1 ; s3, s4) reçus par au moins trois stations réceptrices (1, 2, 7) différentes, de façon à produire une grandeur calculée sur laquelle les temps système de ces stations (1, 2, 7) n'ont aucune influence si on les considère selon une approximation linéaire.

5. Procédé selon une revendication précédente, dans lequel certaines/les valeurs de mesure d'au moins trois stations réceptrices (1, 2, 7) sont calculées à partir des signaux (s2, s1 ; s3, s4) reçus selon :

$$\tau_{m,k_1,k_2}(t) = \left(\tau_{k_1 \to m}(t) - \tau_{k_2 \to m}(t)\right) + \frac{1}{2}\left(\tau_{k_2 \to k_1}(t) - \tau_{k_1 \to k_2}(t)\right) \qquad (1.2)$$

6. Procédé selon une revendication précédente, dans lequel, si plus de trois stations (1, 2, 3, 7) sont utilisées, certaines/les valeurs de mesure d'au moins trois stations réceptrices (1, 2, 7) sont calculées à partir des signaux (s2, s1 ; s3, s4) reçus selon :

$$\begin{pmatrix} clk_1(t) + T_0 \\ clk_2(t) + T_0 \\ \vdots \\ clk_N(t) + T_0 \end{pmatrix} = A(t) \begin{pmatrix} \tau_{1 \to 2}(t) \\ \tau_{1 \to 3}(t) \\ \vdots \\ \tau_{2 \to 1}(t) \\ \tau_{2 \to 3}(t) \\ \vdots \\ \tau_{N \to (N-1)}(t) \end{pmatrix} \qquad (1.5)$$

en particulier selon :

$$clk_k(t) + T_0 = \frac{1}{2N}\left(\sum_{k' \neq k} \tau_{k' \to k}(t) - \sum_{k' \neq k} \tau_{k \to k'}(t)\right) \qquad (1.7)$$

7. Procédé selon une revendication précédente, dans lequel un décalage d'horloge de la station réceptrice (7) par rapport à au moins une des stations de référence (1, 2) est déterminé.

8. Procédé selon une revendication précédente, dans lequel des signaux en onde continue en fréquence modulée (FMCW) ou en onde continue décalée en fréquence (FSCW) sont utilisés ou constitués pour servir de signaux (s1, s2 ; s3, s4) émis.

9. Procédé selon une revendication précédente, dans lequel le procédé de multiplexage utilisé est un accès multiple par répartition de fréquences entrelacées (IFDMA) ou un accès multiple par répartition en code (CDMA).

10. Procédé selon une revendication précédente, dans lequel une émission simultanée ou à peu près simultanée est réalisée comme un mode d'émission qui se recoupe dans le temps ou un mode d'émission entre deux émissions d'une station avec un temps de repos inférieur à la durée de la réponse en impulsions sur le canal.

11. Système avec

- au moins deux stations de référence (1, 2) qui émettent des signaux (s1, s2 ; s3, s4) et qui présentent chacune au moins une unité de calcul et/ou de commande (9) et
- au moins une station au moins réceptrice (7) qui reçoit des signaux (s3, s4) d'au moins deux des stations de référence (1, 2) et qui présente au moins une unité de calcul et/ou de commande (10),
- les unités de calcul et/ou de commande (9, 10) étant conçues ou paramétrées pour exécuter chacune au moins une partie des étapes du procédé selon une revendication précédente et pour exécuter l'ensemble du procédé dans leur globalité.

12. Station de référence (1, 2) paramétrée pour l'exécution d'un procédé selon l'une des revendications 1 à 10, dans laquelle la station de référence (1, 2) non seulement émet son propre signal (s1, s2) mais reçoit aussi au moins un signal (s2, s1) émis en même temps par une autre station de référence (2, 1) et détermine avec une grand précision un décalage dans le temps (T1) et/ou une position de phase entre sa propre émission et la réception, la station de référence (1, 2) comprenant en outre une unité de calcul et/ou de commande (9) qui commande les émissions futures des stations de référence (1, 2) en fonction des décalages temporels (T1) et/ou positions de phase constatés.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2653886 A1
- DE 69723587 T2
- US 7940743 B
- US 2009222589 A

**In der Beschreibung aufgeführte Nicht-Patentliteratur**

- **S. ROEHR ; M. VOSSIEK ; P. GULDEN.** Method for High Precision Radar Distance Measurement and Synchronization of Wireless Units. *2007 IEEE MTT-S International Microwave Symposium, Honolulu, USA,* Juni 2007, 1315-1318